# EUROPEAN PATENT APPLICATION

(11) **EP 4 656 355 A1**
(43) Date of publication of application: **03.12.2025**
(21) Application number: 25167442.0
(22) Date of filing: 31.03.2025
(51) Int. Cl.: B29C 51/00, B29C 51/02, B29C 51/10, B29C 51/14, B29C 51/26, B29C 51/42, B29C 65/00, B65D 77/20, B65D 75/30, B29C 51/16, B29K 1/00, B29K 705/02, B31B 105/00, B29L 31/00

(54) **METHOD FOR MAKING A PACK**

(30) Priority: 31.05.2024 IT 202400012514
(71) Applicant: G. Mondini SpA, 25033 Cologne (BS) (IT)
(72) Inventor: MONDINI, Paolo Carlo, 25033 Cologne BS (IT)
(74) Representative: Ponchiroli, Simone

(57) **Abstract**

A method for making a pack wherein a thermoformable first sheet (7) and a second sheet (8) smaller than the first sheet are positioned over a container (2) in which a product (1) is inserted, a fixing step for fixing the first sheet (7) and the second sheet (8) to a perimetric portion (33) of the container (2), and a deforming step during which the first sheet (7) is thermoformed causing the first sheet (7) to partially move away from the second sheet (8) towards the product (1). At the end of the deforming step the second sheet (8) is fixed to the first sheet (7) at the perimetric portion (33) of the container and extends across part of the upper mouth of the container (2), the upper mouth being at least partially free of the second sheet (8).

## Description

This invention relates to a method for making a pack, and is intended for the at least partial vacuum packaging, in particular with the skin method, of fresh food products, even liquid or semi-liquid, although more generally also being advantageously usable for other types of product.

In more detail this invention relates to the making of packs in which the product is inserted in a container which is closed at the top by a sheet of thermoplastic material and in which an information label is positioned transversally relative to an upper mouth of the container. Purely for a simple explanation, the particular case of vacuum packaging referred to below will often be skin packaging in which a sheet of thermoplastic material is made to adhere to the product (and to the inside of the container) in such a way as to constitute a kind of second skin for the product.

In accordance with the prior art, the product to be packaged is first placed in the container which comprises a bottom wall, a lateral wall which extends upwards starting from an outer perimeter of the bottom wall and, optionally, an upper flange which extends outwards starting from an upper edge of the lateral wall.

Then a sheet of thermoformable material (for example of a type specifically designed for skin packaging) is thermoformed over the container and is thereby made to adhere both to the product, and to the free surface of the container (generally as far at the flange if the latter is present).

Whilst on one hand vacuum packaging is very enticing for consumers, allowing visual appreciation of the integrity of the pack (in the case of skin packaging also allowing the packaged product to be looked at almost as if it were without the pack), on the other hand it is not really suited to marketing demands in terms of the possibility of presenting additional information on the pack. In fact, the irregular stretching to which the thermoformable film of each individual product is subjected, makes it difficult to print images or text on it, since they would inevitably be deformed during the packaging step.

Consequently, in the simplest vacuum packs on the market, all of the images and text are usually placed on the container.

However, even those packs are not without disadvantages. In fact, the deformation of the thermoformed sheet towards the inside of the container makes it difficult to stack the packs, as well as to display them at points of sale.

In contrast, in some cases in an attempt to overcome both disadvantages, companies prefer to apply, over the vacuum pack, a label positioned in such a way as to extend over the upper mouth of the container.

However, this solution too is not without disadvantages.

First, it involves a higher cost linked to the need to have an additional labelling machine mounted on the packaging line.

In contrast, in yet other cases, companies prefer to insert the vacuum pack inside a cardboard or paperboard wrapper. In some cases the wrapper is completely closed and hides the product from view, in other cases it only affects part of the pack and/or has windows allowing consumers to even directly look at the product; sometimes it is in the form of a sleeve.

This solution too is advantageous since it usually allows packs to be made with a flat upper face which can easily be stacked both during transportation and marketing.

On the other hand, even this solution has a relatively high cost, in terms of the need to equip the production line with a machine for the second packaging, and as regards the quantity of material to be used for each individual pack.

In accordance with a further prior art solution, instead of using a cardboard or paperboard outer wrapper, it was proposed that a further plastic top film should be applied to the skin packs already made, for example by fixing it to the flange of the container in such a way as to hold it substantially taut at the upper mouth. However, to do that the packaging line must be equipped with a second sealing apparatus configured to apply the plastic top film on a previously formed skin pack.

Similar requirements to add second packaging to a pack already made currently also exist for ambient temperature packaging systems, such as the ready meal packaging sector. In fact, if ready meals are packaged when the product is still hot, or in some cases in which the packs are subsequently subjected to a thermal treatment process (for example pasteurisation), an upper film deformation effect is obtained, which is unwanted because it is aesthetically unappealing.

In this context the technical purpose which forms the basis of this invention is to provide a method for making a pack which overcomes the above-mentioned disadvantages.

In particular, the technical purpose of this invention is to provide a method for making a pack, which allows the advantages of vacuum packaging to be combined with those of a traditional pack.

It is also the technical purpose of this invention to provide a method for making a pack which involves lower costs than similar prior art solutions, both as regards the production line, and as regards the packaging material to be used.

The technical purpose and the aims indicated are substantially achieved by a method for making a pack, as defined in independent claim 1. Particular embodiments of this invention are defined in the corresponding dependent claims.

Further features and the advantages of this invention will be more apparent from the detailed description of several preferred, non-limiting embodiments, of a method for making a pack illustrated with reference to the accompanying drawings, in which:

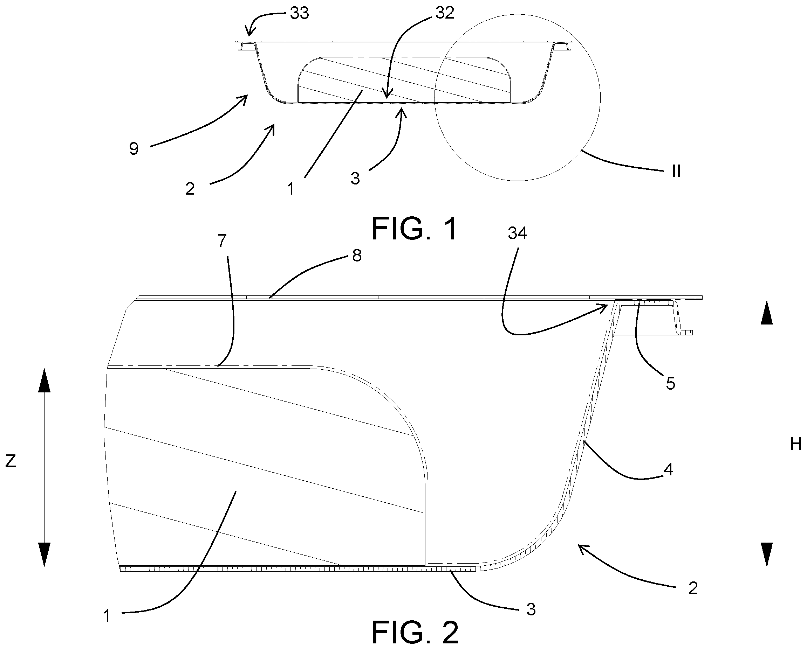

- Figure 1 is a schematic vertical cross-section of a pack obtainable with the method according to this invention;
- Figure 2 is an enlarged view of the detail II of Figure 1;

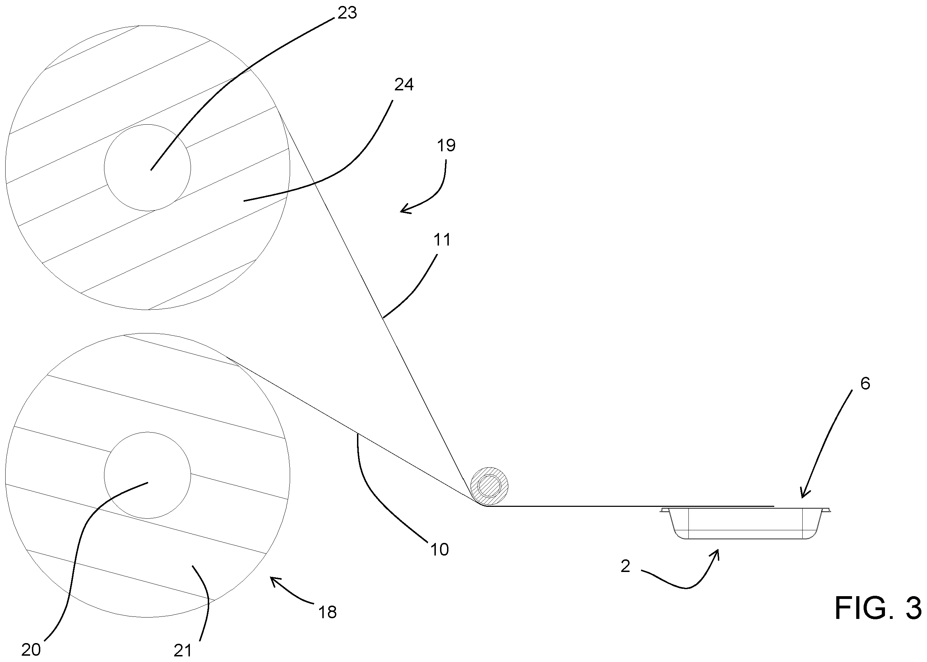

- Figure 3 is a schematic side cross-section of a first embodiment of the method and of an apparatus according to this invention;

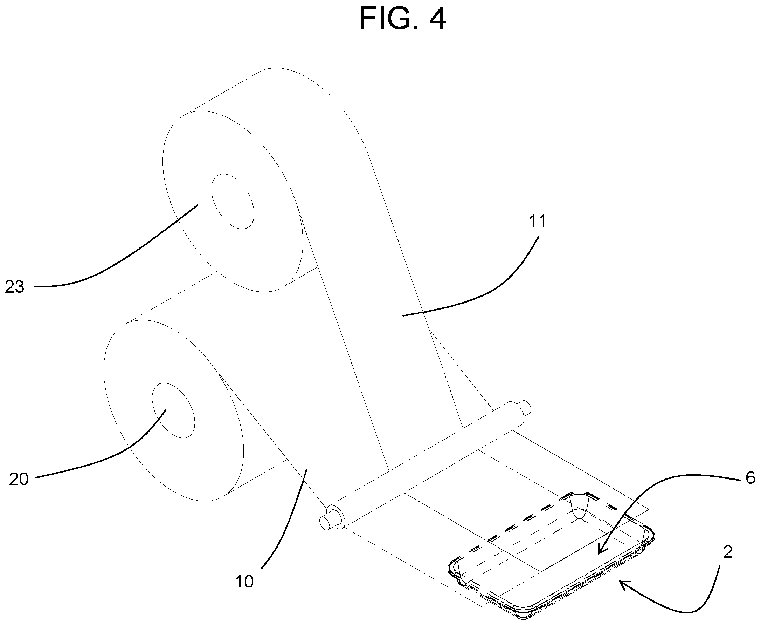

- Figure 4 is an axonometric view of the embodiment of Figure 3;
- Figure 5 is a schematic side cross-section of a second embodiment of the method and of an apparatus according to this invention;
- Figure 6 is an enlarged view of the detail VI-VI of Figure 5;

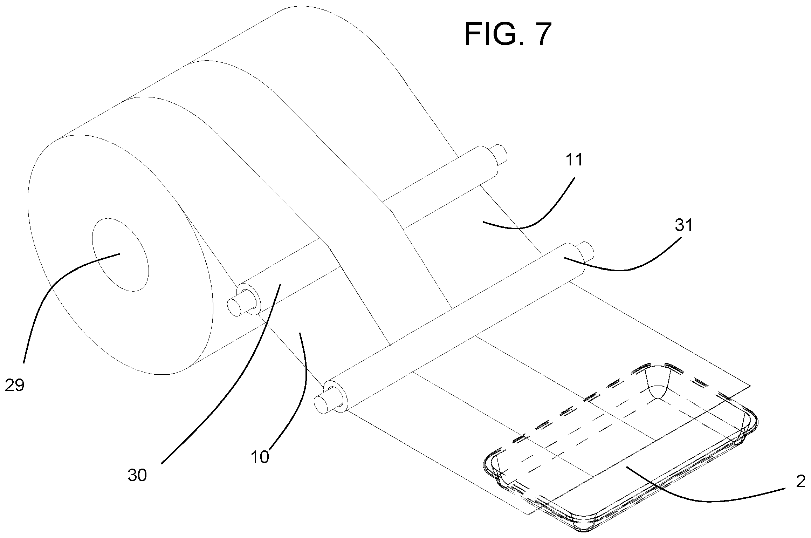

- Figure 7 is an axonometric view of the embodiment of Figure 5;
- Figure 8 is a schematic side cross-section of a third embodiment of the method and of an apparatus according to this invention;
- Figure 9 is an enlarged view of the detail IX-IX of Figure 8;
- Figure 10 is an enlarged view of the detail X-X of Figure 8;
- Figure 11 is an axonometric view of the embodiment of Figure 8;
- Figure 12 is a schematic side cross-section of a fourth embodiment of the method and of an apparatus according to this invention;
- Figure 13 is an enlarged view of the detail XIII-XIII of Figure 12;
- Figure 14 is an enlarged view of the detail XIV-XIV of Figure 12;
- Figure 15 is an axonometric view of the embodiment of Figure 12 with a smaller stack of second sheets for greater clarity;

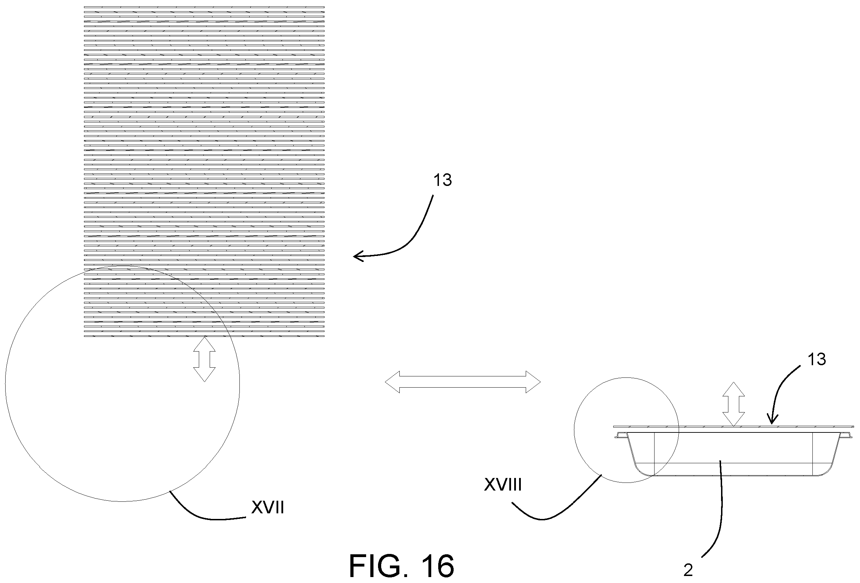

- Figure 16 is a schematic side cross-section of a fifth embodiment of the method and of an apparatus according to this invention;

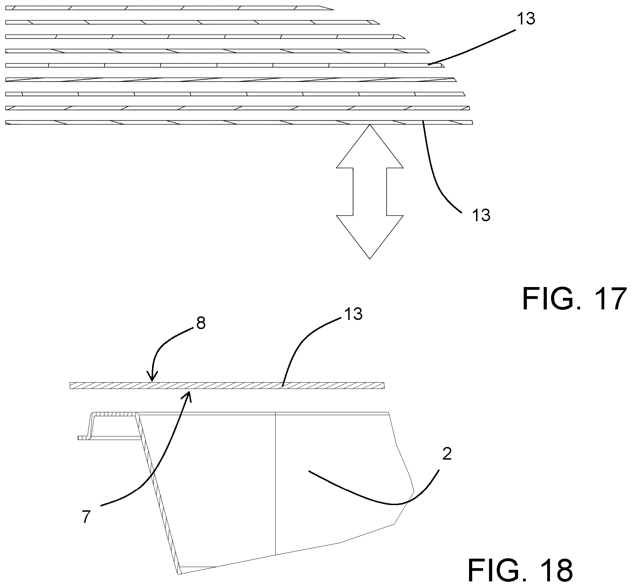

- Figure 17 is an enlarged view of the detail XVII-XVII of Figure 16;
- Figure 18 is an enlarged view of the detail XVIII-XVIII of Figure 16;
- Figure 19 is an axonometric view of execution of a deforming step according to this invention;
- Figure 20 is a schematic side cross-section of a sixth embodiment of the method and of an apparatus according to this invention;
- Figure 21 is an enlarged view of the detail XXI-XXI of Figure 20;
- Figure 22 is an enlarged view of the detail XXII-XXII of Figure 20;
- Figure 23 is an axonometric view of the embodiment of Figure 20; and
- Figures 24 to 27 show four successive steps of the method according to this invention, carried out inside a sealing device.

The following is first a description of the method according to this invention, both in its more general form, and in its more specific embodiments. Then a description of the different embodiments of apparatuses usable in the context of this invention, each of which is configured to implement a particular embodiment of the method.

What is described, relative to the apparatus, shall be understood to also apply, if technically compatible, to the method.

In the most general embodiment, the method according to this invention comprises, in order, a positioning step and an applying step and involves the use of a container 2 which contains the product 1.

Advantageously the container 2 has a bottom wall 3 and a lateral wall 4. The lateral wall 4 is annular and comprises a lower portion connected to an outer perimeter of the bottom wall 3 and an upper portion 34 which delimits an upper mouth 6 of the container 2 (even the lower portion and the upper portion 34 have respective annular extents around the bottom wall 3). In some cases the container also comprises an upper flange 5 which extends outwards starting from the upper portion 34 of the lateral wall 4. In contrast, when the flange 5 is not present, the upper portion 34 ends with a free upper edge.

Looking at the container 2 from above (that is to say, in plan view), it is possible to identify in it a central portion 32, which comprises the bottom wall 3 and the lower portion of the lateral wall 4, and a perimetric portion 33, which has an annular extent around the central portion (32).

When the container is without the flange 5, the perimetric portion comprises (or is constituted of) the upper portion 34 of the lateral wall 4. In contrast when the container 2 is equipped with the flange 5, the perimetric portion may comprise, or be constituted of, the flange 5 alone, the upper portion 34 alone, or both the perimetric portion 34 and the upper flange 5. Depending on the embodiments, the container 2 may be a pre-formed container 2, or the method may comprise any known sequence of steps for making it, for example by thermoforming starting from a reel of material, or by using a thermoformable film to coat a support made of cellulose-based material (which in turn may be obtained, in a way known in the sector, by folding one or more sheets of material).

In terms of materials, the container 2 may be made with any material: plastic, cardboard, paperboard, cellulose pulp, aluminium, metal, or combinations of them. Moreover, the container 2 may for example be constituted of a single-layer material, of a multi-layer material or combinations of one or more single-layer materials and/or one or more multi-layer materials.

Even the product 1 may be of any type, although this invention is advantageously applied for food products and, in particular, for fresh food products.

The container 2 is advantageously selected in such a way that the height H of the perimetric portion 33 relative to the bottom wall 3 of the container, is higher than every point of the product 1, that is to say, it is greater than the maximum thickness Z of the product 1 to be inserted (that is to say, the size of the product 1 measured perpendicularly to the bottom wall 3 of the container once the product 1 is inserted in the container). In other words, the product 1 does not protrude relative to the container.

In some embodiments, the product 1 may be liquid or semi-liquid (such as a thick soup or a thin soup).

In some embodiments, before the positioning step, the method may comprise an inserting step during which the product 1 to be packaged is positioned in the container 2, in particular at the central portion 32.

In some embodiments, referred to in more detail below, during the inserting step the product is kept at a temperature greater than 50°C, preferably greater than 70°C.

During the positioning step, both a first sheet 7 and a second sheet 8, associated with each other, are positioned over the container 2 containing the product 1. Moreover, the first sheet 7 is positioned between the container 2 and the second sheet 8 (in other words, the second sheet 8 is positioned over the first sheet 7 which is positioned over the container 2). The first sheet 7 is a sheet constituted of a first material which is a thermoformable material, whilst the second sheet 8 is constituted of a second material which comprises at least one primary layer which, in accordance with this invention, is made of cellulose, of aluminium or of another non-thermoformable material (meaning a material which is not thermoformed if subjected to the normal thermoforming conditions for thermoformable polymeric materials).

Depending on requirements the first material may be any single-layer or multi-layer material which has the required thermoformability features (which are more accentuated, for example, in the case of skin packaging), in particular a material which comprises at least one thermoformable polymeric layer.

In turn, the second sheet 8 may be single-layer or multi-layer and may also contain multiple primary layers (constituted of the same or different materials) and one or more layers of polymeric or another type of material. The primary layer may also cover the entire extent of the second sheet 8, or only a part of it. Moreover, either the second sheet 8 as a whole, or the primary layer alone, may define windows (not illustrated) through which it is possible to look at the product 1 in the final pack (as will be more apparent in the description below).

At the end of execution of the method according to this invention, the second sheet 8 is fixed to the first sheet 7 at the perimetric portion 33 of the container and extends across part of the upper mouth of the container 2; however, at the same time, the upper mouth is at least partially free of the second sheet 8.

When it is in a non-thermoformed extended condition, the first sheet 7 has an extent greater than the extent of the central portion 32 of the container 2, and during the positioning step it is positioned on the container 2 in such a way that it is superposed on the entire central portion 32 and in contact with the perimetric portion 33 along the entire annular extent of the perimetric portion 33. In other words, the perimetric edge of the first sheet 7 is entirely superposed on the perimetric portion 33.

Depending on the embodiments, the first sheet 7 may adopt many different shapes; for example, the first sheet may have a rectangular, square, polygonal (regular or irregular), elliptical, circular, etc. shape. When it has edges, these may be sharp or rounded.

In turn, the second sheet 8 has an extent which is less than that of the first sheet 7. In some embodiments, the second sheet 8 has a first dimension which substantially corresponds to one of the dimensions of the first sheet 7, and a second dimension which is less than the other dimension of the first sheet 7 (preferably no more than half of the latter).

In some embodiments, such as that illustrated in the accompanying figures, both the first sheet 7, and the second sheet 8 have a substantially rectangular shape, with the larger side of the second sheet 8 substantially having the same length as the smaller side of the first sheet 7.

As is also explained in more detail below, depending on the embodiments of this invention, during execution of the positioning step each first sheet 7 and second sheet 8 may be either a detached sheet, or may be an integral part of a larger web from which it will subsequently be detached during a subsequent cutting step, which may be carried out either before or after the applying step.

During the subsequent applying step, the first sheet 7 and the second sheet 8 are fixed to the container 2, one over the other, to obtain a pack 9 containing the product 1.

In accordance with this invention, the applying step in turn comprises a fixing step and a deforming step which may be carried out in any order or simultaneously. Following completion of the applying step the product 1 remains hermetically contained between the container 2 and the first sheet 7.

During the fixing step, the first sheet 7 and the second sheet 8 are fixed to the perimetric portion 33 of the container 2 with the first sheet 7 interposed between the perimetric portion 33 and the second sheet 8. Advantageously, in particular, the first sheet 7 is fixed to the perimetric portion of the container 2, whilst the second sheet 8 is fixed to the first sheet 7 and/or to the perimetric portion 33 of the container 2 (depending on the dimensions of the first sheet 7, of the second sheet 8 and of the perimetric portion 33 of the container 2).

During the deforming step, the first sheet 7 is deformed relative to the second sheet 8.

Advantageously, the deforming step is carried out by creating a pressure difference between a first face of the first sheet 7 facing the container 2 (and the product 1) and a second face of the first sheet 7 facing the second sheet 8. The pressure difference may be obtained either by only creating the vacuum at the first face, or by also feeding compressed air at the second face. Moreover, preferably, the deforming step is carried out by heating the first sheet 7, after the first sheet 7 has been subjected to a heating step which increased its deformability. In some preferred embodiments of this invention, the deforming step is a step of thermoforming the first sheet 7 towards the product 1 and the central portion 32 of the container 2. Execution of the deforming step for deforming the first sheet 7 causes the first sheet 7 to move away from the second sheet 8 at the zone where the two sheets face each other which is at the central portion 32 of the container 2. In other words, during the deforming step, at least inside the annular frame defined by the perimetric portion 33 of the container 2, the first sheet 7, constituted of the thermoformable first material, deforms by at least partially and/or locally shifting towards the product 1 and the central portion 32, whilst the second sheet 8, thanks to the presence of the substantially intextensible primary layer, at least mainly retains its shape (however it may adopt concave or convex shapes which do not significantly alter its extent). If the first sheet 7 is locally in contact with the product 1 before the deforming step, during the latter the first sheet 7 deforms substantially only in the zones in which it is not in contact with the product 1 (and therefore an empty space is present between the first sheet 7 and the central portion 32 of the container 2.

The innovative aspect which forms the basis of this invention is therefore that of applying, in the context of a single operating step (the applying step), both the thermoplastic film which seals the product 1 on the container 2, and the upper second sheet 8, by innovatively using the different mechanical properties of the materials of which the two sheets are constituted. Advantageously, this invention is preferably implemented if the thermoforming of the first sheet 7 is a thermoforming with skin effect (in that case the first material will be a thermoformable material of a type specifically configured for skin packaging).

As already indicated above, in some embodiments, the first sheet 7 is obtained from a first web 10 constituted of the first material and the method also comprises a first cutting step during which the first web 10 is cut to obtain the first sheet 7. That first cutting step may be carried out either after the applying step or before the applying step. Moreover, in the latter case, the first cutting step may be carried out either before the positioning step, or after the positioning step for positioning the first sheet 7 over the container 2.

Similarly, in some embodiments the second sheet 8 is obtained from a second web 11 constituted of the second material and the method also comprises a second cutting step during which the second web 11 is cut to obtain the second sheet 8. The second cutting step may also be carried out either after the applying step or before the applying step. Moreover, in the latter case, the second cutting step may be carried out either before the positioning step, or after the positioning step for positioning the second sheet 8 over the container 2 and over the first sheet 7.

In some embodiments, comprising both the first cutting step and the second cutting step, the first cutting step and the second cutting step may be carried out together while the second web 11 is superposed on the first web 10.

In some embodiments, during execution of the positioning step, the first web 10 and the second web 11 may be at least locally joined to each other. In particular, they may be joined to each other at a plurality of separate points, advantageously distributed on the surface of the two webs, or over the entire extent of the second web 11 (advantageously with reduced adhesion), or only at the longitudinal edges of the second web 11. However, in all cases, the adhesion between the two webs will always be sized/configured in such a way that the first sheet 7 can detach from the second sheet 8 during the deforming step, thanks only to the force generated on the first sheet 7 following the creation of a sufficient pressure difference on the two sides of it (for example following execution of the thermoforming process).

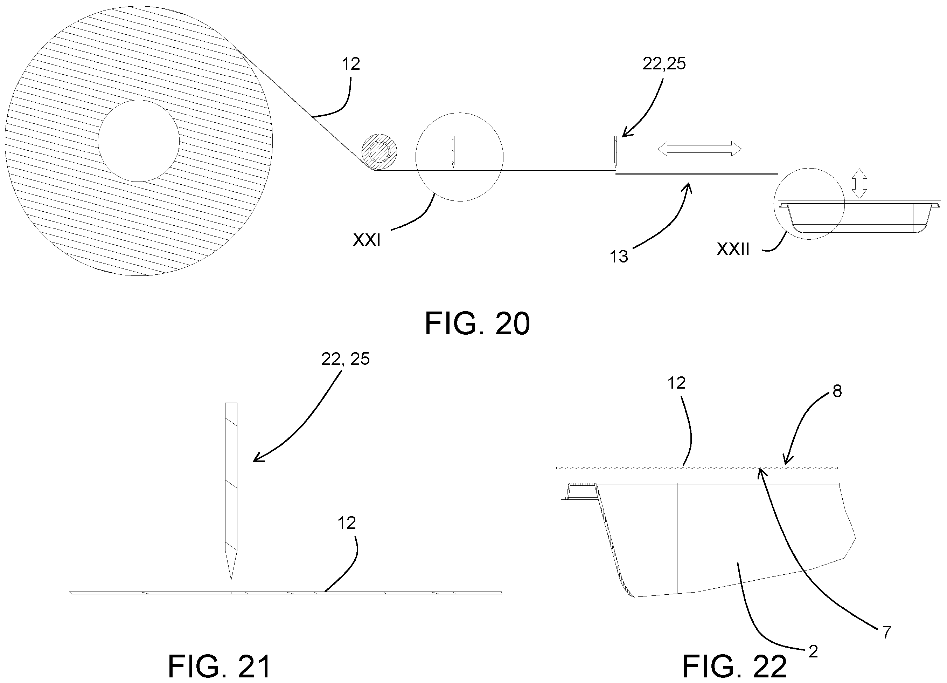

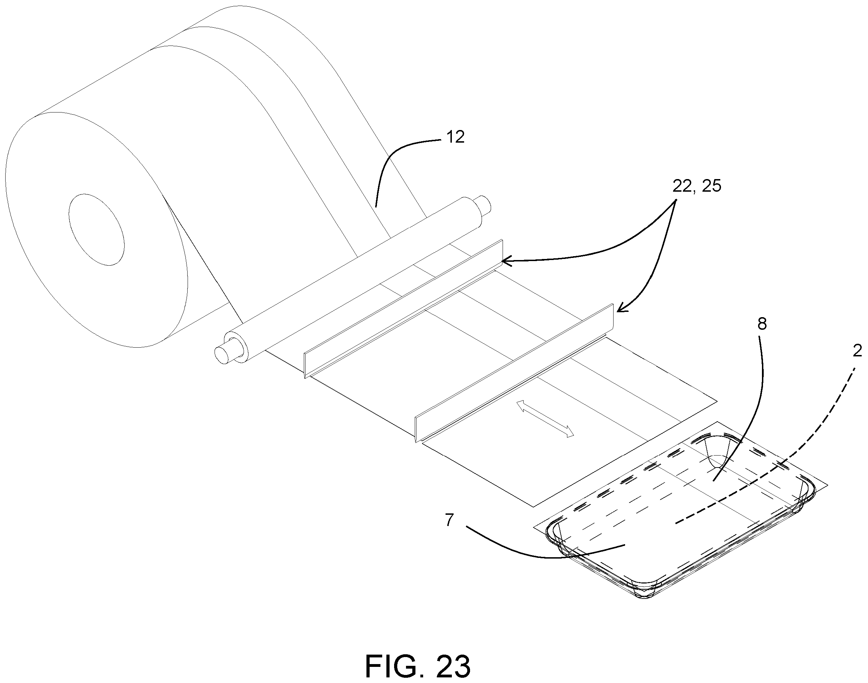

It should be noticed that in some embodiments the first web 10 and the second web 11 are joined to each other at the production stage, so that when implementing this invention it is possible to use only a third web 12 constituted of a two-layered material in which a first layer is constituted of the first material and a second layer is constituted of the second material. Advantageously, in this case the third web 12 is initially wound in a reel and the method also comprises an unwinding step during which the third web 12 is unwound from that reel (Figures 20-23). Similarly, when use of the first web 10 and of the second web 11 which are at least initially separate is required, each of them is initially advantageously wound in a reel and the method also comprises an unwinding step during which the first web 10 and the second web 11 are unwound from the respective reels.

In contrast, in other embodiments, the first web 10 and the second web 11 are initially separate but are then joined to each other (in the ways indicated above) just before being used in the positioning step, so as to guarantee that they are precisely and consistently managed and positioned (therefore making, during execution, an equivalent of the third web 12 described above). For that purpose the method may advantageously comprise coupling of the second web 11 to the first web 10 before the positioning step.

In other embodiments, the first web 10 and the second web 11 are in contrast always kept detached until the end of the positioning step, for which they are therefore fed in an independent but coordinated or linked way so as to guarantee correct positioning of the first sheet 7 and of the second sheet 8.

In some embodiments, in contrast the first sheet 7 is fed to the positioning step while it is still an integral part of the first web 10, and the second sheet 8 is in contrast fed as an individual sheet. In some of these cases, the second sheet 8 is a pre-die cut sheet, whilst in others it is obtained from the second web 11 by carrying out the second cutting step before the positioning step.

Furthermore, in some cases before the positioning step the method comprises execution of a coupling step in which the second sheet 8 is coupled to the first web 10 before execution of the first cutting step.

In other embodiments, before the positioning step the method comprises a coupling step during which the first sheet 7 and the second sheet 8 are at least locally attached to each other similarly to what was described above for the webs (obviously always in such a way that, during the deforming step, the first sheet 7 detaches from the second sheet 8 at the central portion 32 of the container 2).

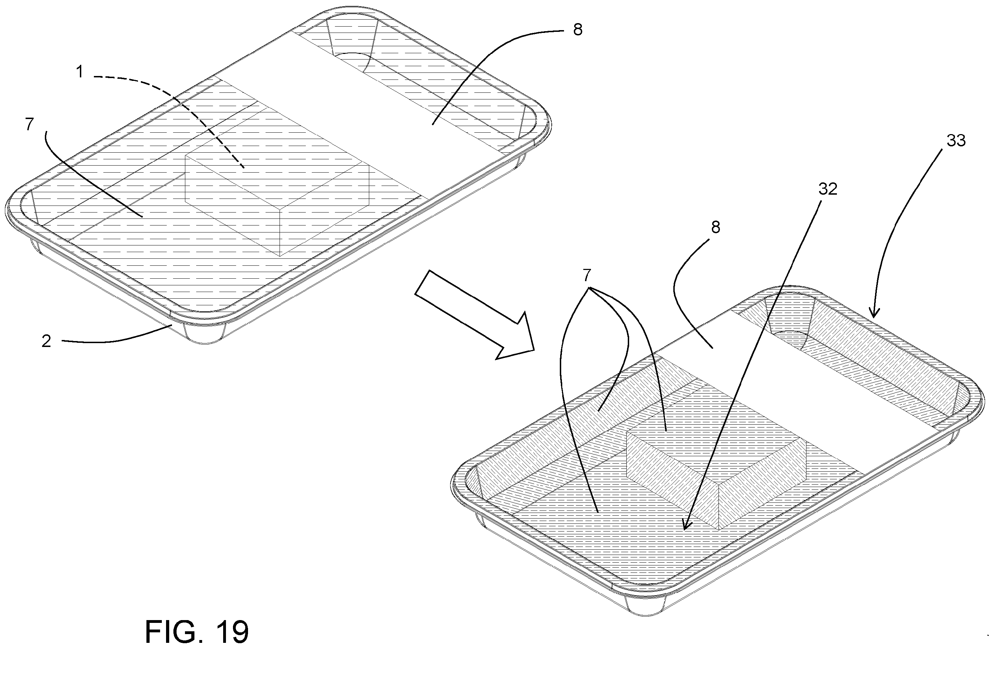

In other embodiments, the first sheet 7 and the second sheet 8 are fed to the positioning step in the form of a third sheet 13 constituted of a two-layered material in which a first layer is constituted of the first sheet 7 and a second layer is constituted of the second sheet 8 (Figures 19 to 22).

Both in that embodiment, and in other embodiments in which the first sheet 7 and the second sheet 8 are at least locally joined to each other during execution of the method, advantageously the first sheet 7 and the second sheet 8 are attached to each other at a plurality of separate points or over the entire extent of the second sheet 8, or at predefined adhering lines, or at the edges of the second sheet 8.

In general, irrespective of whether the first sheet 7 and the second sheet 8 are attached to or detached from each other during execution of the positioning step, in many embodiments the positioning step is carried out by keeping the first sheet 7 and the second sheet 8 in contact with each other.

Moreover, in general, in all of the embodiments in which the first sheet 7 is attached to the second sheet 8, or the first web 10 is attached to the second web 11, the adhesion between the first material and the second material may be obtained either using a glue (if necessary of the heat-activatable type) or by a heat gluing which uses the adhesive capability of a surface layer of the first material and/or of the second material.

In the preferred embodiments of this invention, according to the method the positioning and applying steps are carried out inside a sealing device 14.

In that case, after the inserting step and before the positioning step there is a feeding step during which the container 2, with the product 1, is fed inside the open sealing device 14. Moreover, after the positioning step there is a closing step during which the sealing device 14 is closed with the container 2 with the product 1, the first sheet 7 and the second sheet 8 inside it.

In some embodiments, the deforming step is advantageously a thermoforming step during which a vacuum is created inside the sealing device 14 between the heated first sheet 7 (heated in the known way) and the container 2, and the first sheet 7 is thereby made to adhere to the container 2 and to the product 1. Preferably, the thermoforming step is a skin applying step during which the vacuum is created inside the sealing device 14.

In other embodiments, in which during the inserting step the product 1 is inserted in the container at a temperature greater than 50°C, the fixing step is carried out, after which the product is left, or made, to cool at least to ambient temperature (in some cases it may even be refrigerated), so as to cause a pressure reduction in the space between the first face of the first sheet 7 and the container 2 relative to the pressure present on the second face of the first sheet 7. That result is due to the fact that the initial presence of the hot product, in particular in the case of a liquid or semi-liquid product, caused a heating of the atmosphere present in the space between the first face of the first sheet 7 and the container 2 and therefore a rarefaction of it. The pressure difference between the two faces of the first sheet 7 obtained in this way causes the deformation of the first sheet 7.

In some embodiments, according to the method, after the fixing step the pack containing the product 1 is first subjected to a heating thermal treatment (for example pasteurisation) which causes a pressure increase in the space between the first face of the first sheet 7 and the container 2, and then is left or made to cool to ambient temperature so as to cause a pressure reduction in the space between the first face of the first sheet 7 and the container 2. In those embodiments the deforming step for deforming the first sheet 7 is carried out by leaving the pack to cool or making it cool and the deformation of the first sheet 7 is obtained as a result of that pressure reduction which is obtained during the cooling.

Moving on to the description of the apparatus usable in the context of this invention, it is advantageously configured to carry out the embodiments of the method in which the first sheet 7 and the second sheet 8 are at least initially separate.

On the other hand, in order to carry out embodiments in which the first sheet 7 and the second sheet 8 are attached to each other from the start (including both the case in which together they constitute a third sheet 13, and the case in which they are obtained from the third web 12), the method according to this invention may in contrast be carried out using prior art sealing or vacuum packaging apparatuses, in particular of the skin type. In particular, it is possible to use apparatuses of the type configured to use individual sheets, if the third sheet 13 is to be used, or apparatuses of the type configured to use webs, if the third web 12 is to be used. In both cases the detachment of the first sheet 7 from the second sheet 8 will advantageously be obtained as a "by-product" of carrying out the sealing or the thermoforming.

Furthermore, if the container 2 is to be created simultaneously with its use, the apparatus 1 may also comprise other devices suitable for making the container 2 (for example by thermoforming it, coating a base with a liner, etc.).

The apparatus comprises first of all a sealing device 14 in turn comprising an upper closing element 15 and a lower support 16. The lower support 16 is configured to house a container 2 of the type described above. Moreover, the lower support 16 and the upper closing element 15 are movable relative to each other between an open configuration of the sealing device 14, in which they are uncoupled, and a closed configuration of the sealing device 14, in which they are coupled to each other.

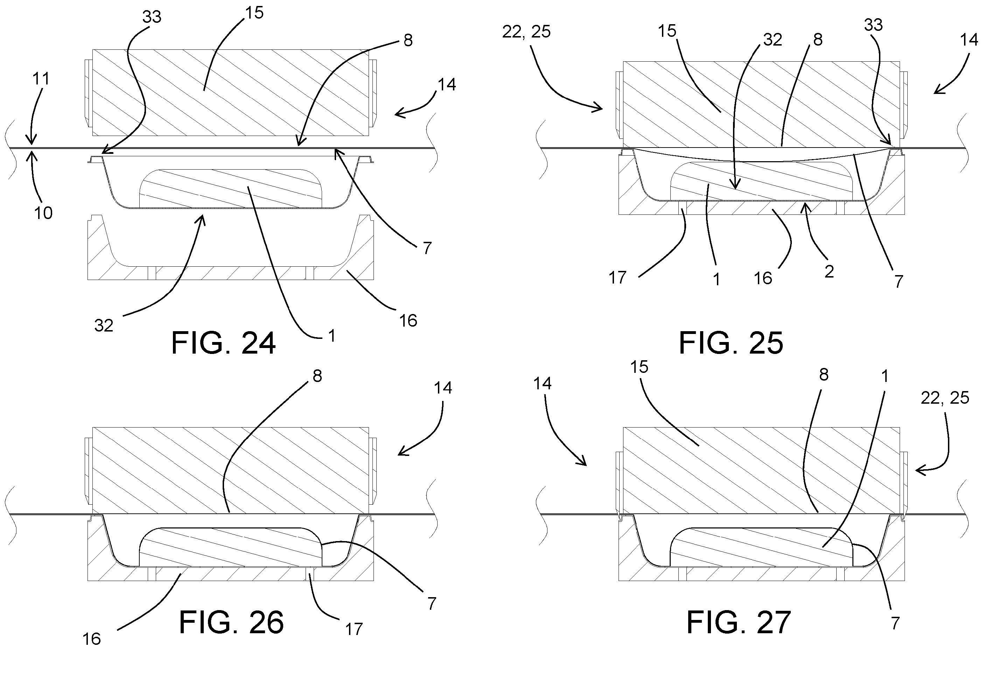

In some embodiments in which the deformation of the first sheet 7 is obtained by mechanically creating a vacuum between the first sheet 7 and the container 2 (such as that illustrated in Figures 24-27), the sealing device 14 is a thermoforming device and vacuum creating means (of which only the holes 17 connecting to the lower support 16 are visible in the figures) are associated with the thermoforming device and are configured to create the vacuum at the lower support 16 (in use between the container 2 and the first sheet 7).

In other embodiments (not illustrated), the apparatus also comprising a thermal treatment device configured to heat in use a pack previously sealed by the sealing device and which is advantageously placed downstream of the sealing device relative to a direction of movement of the packs. In accordance with what was described above relative to the embodiments of the method according to this invention in which the deformation of the first sheet 7 is obtained as a result of a heating of the pack followed by a cooling, the thermal treatment device carries out that heating step.

The apparatus also comprises first feeding means 18 and second feeding means 19, both operatively associated with the sealing device 14.

The first feeding means 18 are operatively associated with the sealing device 14 for feeding the first sheet 7 over the lower support 16, when the sealing device 14 is in the open configuration.

The second feeding means 19 are also operatively associated with the sealing device 14 for feeding the second sheet 8 over the lower support 16 when the sealing device 14 is in the open configuration. Moreover, the first feeding means 18 and the second feeding means 19 are as a whole configured to feed the second sheet 8 over the first sheet 7.

In some embodiments, the first feeding means 18 comprise a first unwinder 20 configured to unwind in use a first reel 21 of a first web 10 constituted of the first material, forward movement means for the first web 10 along a first path towards the sealing device 14 and first cutting means 22 configured to cut in use the first web 10 to obtain the first sheet 7.

Since the forward movement means for a web are in themselves known to an expert in the sector, they are not described here, nor are they illustrated in detail in the accompanying figures.

In some embodiments, the first cutting means 22 are associated with the sealing device 14. In some embodiments, the first cutting means 22 are positioned downstream of the sealing device 14.

In some embodiments, the first cutting means 22 are positioned upstream of the sealing device 14, along the first path.

In some embodiments, the second feeding means 19 comprise a second unwinder 23 configured to unwind in use a second reel 24 of a second web 11 constituted of the second material, forward movement means for the second web 11 along a second path towards the sealing device 14 and second cutting means 25 configured to cut in use the second web 11 to obtain the second sheet 8.

In this case too, since the forward movement means for a web are in themselves known to an expert in the sector, they are not described here, nor are they illustrated in detail in the accompanying figures.

In some embodiments, the second cutting means 25 are associated with the sealing device 14.

In some embodiments, the second cutting means 25 are positioned downstream of the sealing device 14.

In some embodiments, the second cutting means 25 are positioned upstream of the sealing device 14, along the second path.

In some embodiments, the second cutting means 25 coincide with the first cutting means 22 and are configured to cut, in use, simultaneously the first web 10 and the second web 11 while they are in contact with or coupled to each other (Figure 27).

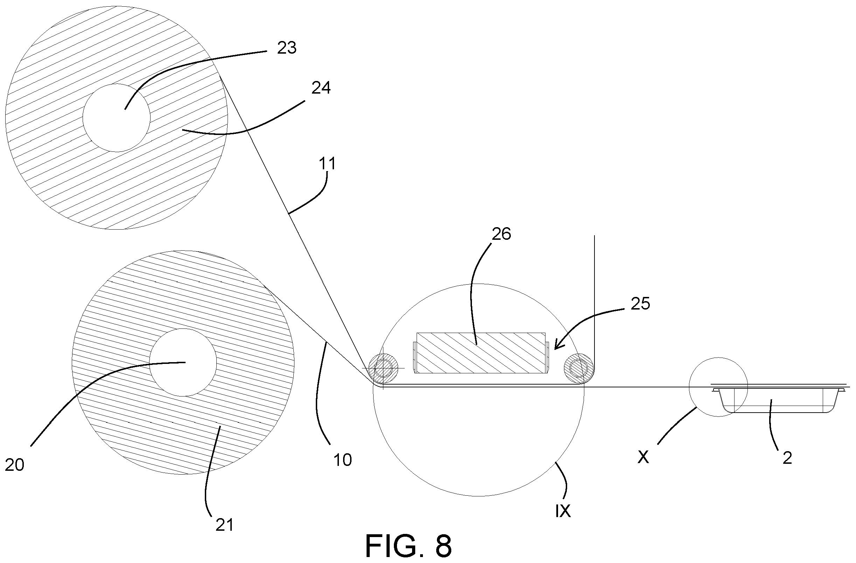

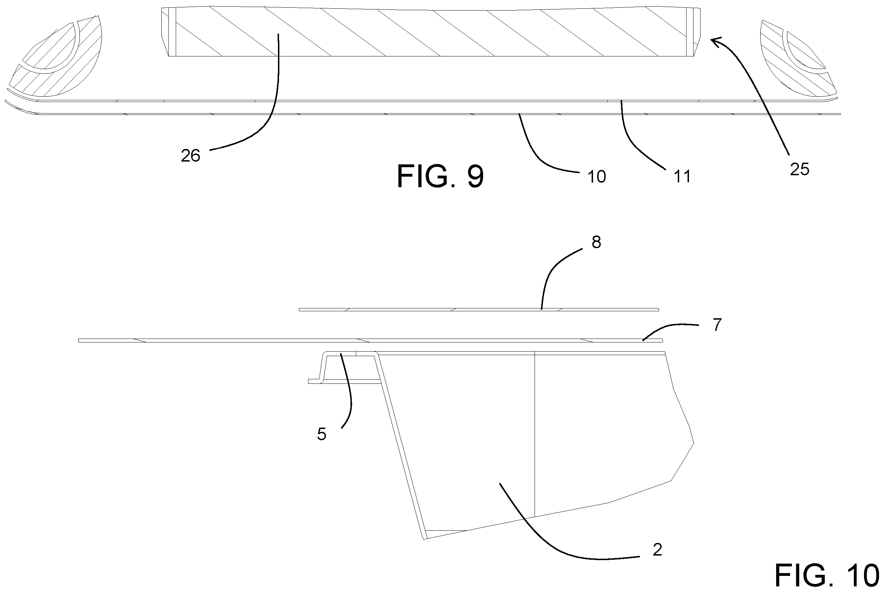

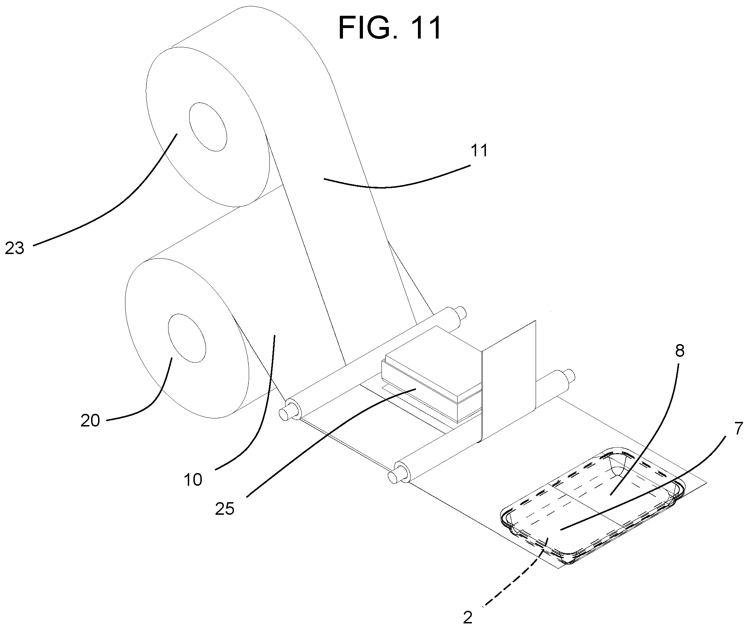

In accordance with other embodiments, the second cutting means 25 are positioned along the first path and the second feeding means 19 comprise a coupling device 26 which is associated with the second cutting means 25 and is configured, in use, to couple to the first web 10 the second sheet 8 cut by the second cutting means 25 (Figures 8-11). Advantageously the coupling is performed by attaching the second sheet 8 to the first sheet 7 in the ways indicated above.

In many embodiments, the first path and the second path comprise a shared stretch along which the first web 10 and the second web 11 move together and, advantageously, in contact. In some of these embodiments, along the shared stretch the apparatus also comprises a coupling device 26 for coupling the second web 11 to the first web 10.

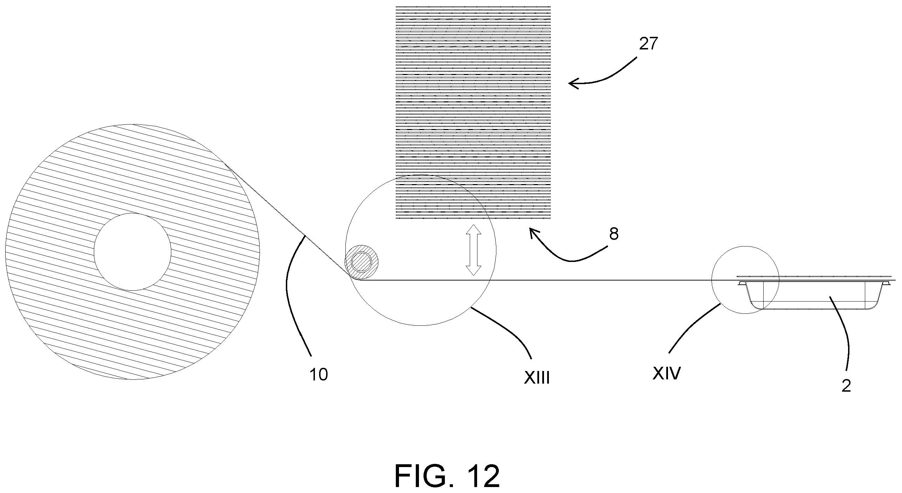

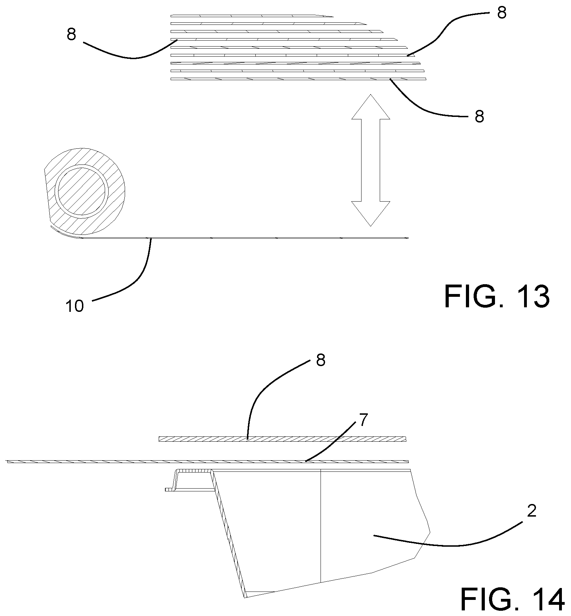

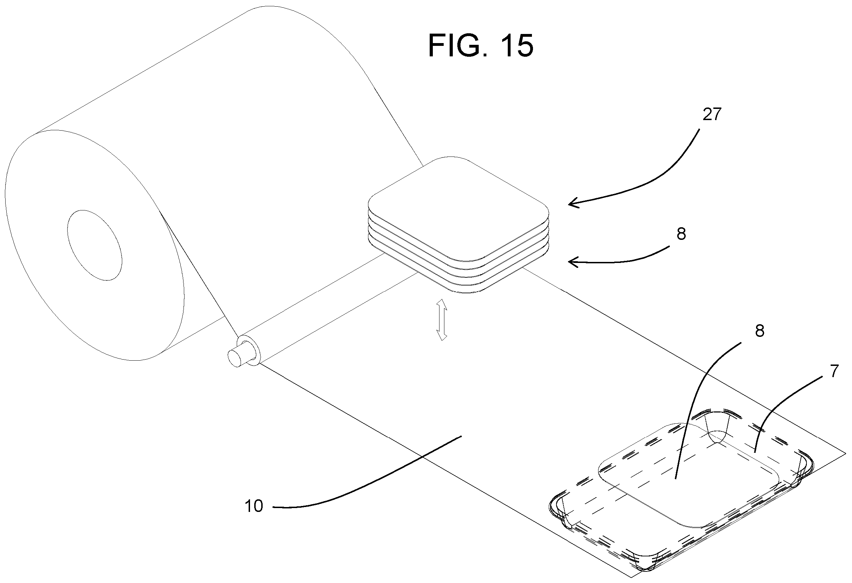

In some embodiments (Figures 12-15), the second feeding means 19 comprise a magazine 27 positioned along the first path and configured to contain in use a plurality of pre-formed second sheets 8, and a coupling device 26 (not illustrated) associated with the magazine 27 and with the first path for, in use coupling to the first web 10 a second sheet 8 released by the magazine 27.

Advantageously, when the apparatus comprises the coupling device 26, it is a heat-sealing or gluing coupling device 26.

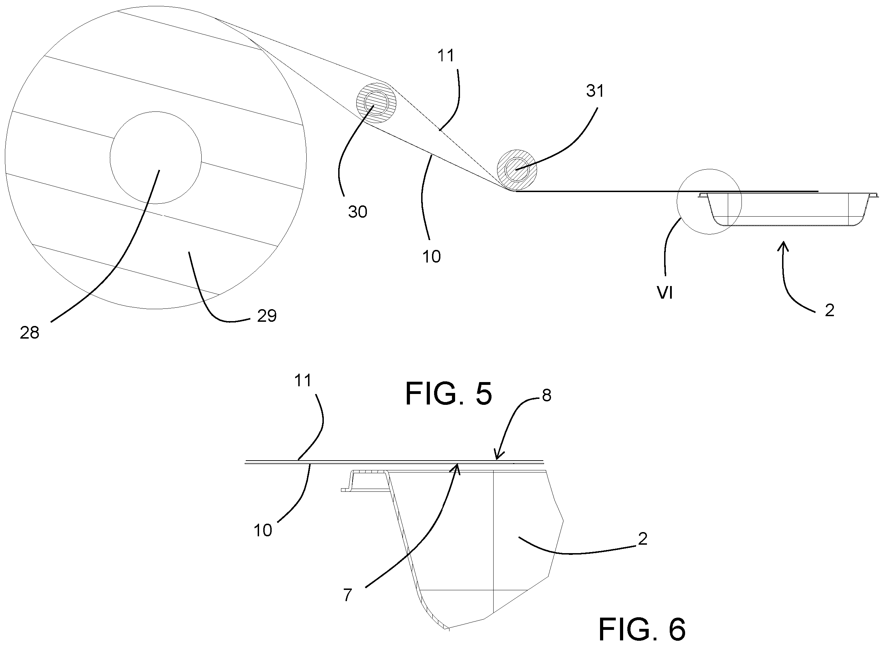

In the case of the embodiment of Figure 5, the first feeding means 18 coincide with the second feeding means 19 since the first web 10 and the second web 11 are initially wound together in a single reel 28, but without being attached to each other. Downstream of the unwinder 29 for unwinding that reel, the first feeding means 18 and the second feeding means 19 comprise one or more rollers 30, or dancing rollers, which in use are positioned between the first web i10 and the second web 11 to separate them. However, downstream of those rollers 30 or dancing rollers the apparatus may comprise a coupling device 26 for coupling the first web 10 and the second web 11 (in Figure 5 for example constituted of a heated roller 31) which makes a web equivalent to the third web 12 described above.

When the first cutting means 22 and/or the second cutting means 25 are at least partly placed, respectively, along the first path and along the second path upstream of the sealing device, it may even be the case that the first sheet 7 and/or the second sheet 8 respectively are conveyed inside the sealing device 14 by one or more movable carriages. Moreover, although the accompanying figures also show the case in which the first sheet 7 and the second sheet 8 are cut from the first web 10 and from the second web 11 without interrupting the continuity of the webs themselves, that is to say with some waste, in this invention the apparatus may also advantageously be configured to cut the first sheet 7 and the second sheet 8 without waste or with minimal waste.

This invention brings important advantages.

First, thanks to this invention it was possible to provide a method and an apparatus for packaging a product, allowing combination of the advantages of vacuum packaging (in particular of the skin type) and a traditional pack, with lower costs than prior art solutions, both as regards the production line and in terms of packaging material.

Finally, it should be noticed that this invention is relatively easy to produce and that even the cost linked to implementing the invention is not very high.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A method for making a pack comprising a container (2), a first sheet (7), a second sheet (8) and a product (1) contained between the container (2) and the first sheet (7), wherein:
the container (2) has a bottom wall (3) and a lateral wall (4) which is annular and which comprises a lower portion connected to an outer perimeter of the bottom wall (3) and an upper portion (34) which delimits an upper mouth (6) of the container (2), wherein, respectively and alternatively, either the upper portion (34) ends with a free upper edge, or the container also comprises an upper flange (5) which extends outwards starting from the upper portion (34), and wherein, moreover, in plan view, in the container (2) it is possible to identify a central portion (32), which comprises the bottom wall (3) and the lower portion of the lateral wall (4), and a perimetric portion (33), which has an annular extent around the central portion (32) and which comprises, or is constituted of, respectively, the upper portion (34) and/or the upper flange (5);
the first sheet (7) is constituted of a first material, the first material being a thermoformable material; and
the second sheet (8) is constituted of a second material comprising at least one primary layer which is made of cellulose or of aluminium or of another non-thermoformable material;
the second sheet (8) has an extent which is less than that of the first sheet (7) and has a first dimension which substantially corresponds to a first dimension of the first sheet (7), and a second dimension which is less than a second dimension of the first sheet (7);
the second sheet (8) is fixed to the first sheet (7) at the perimetric portion (33) and extends across part of the upper mouth of the container (2), the upper mouth being at least partially free of the second sheet (8);
the method comprising the following operating steps:
a positioning step during which the first sheet (7) and the second sheet (8), associated with each other, are positioned over the container (2) in which the product (1) is inserted, with the first sheet (7) interposed between the container (2) and the second sheet (8), and
an applying step during which the first sheet (7) and the second sheet (8) are fixed to the container (2) to seal the product (1) between the container (2) and the first sheet (7); wherein the positioning step is carried out using the first sheet (7) in a non-thermoformed extended condition and positioning it in contact with the perimetric portion (33) along the entire annular extent of the perimetric portion (33), and wherein the applying step comprises the following steps:
a fixing step during which the first sheet (7) and the second sheet (8) are fixed to the perimetric portion (33) of the container (2) with the first sheet (7) interposed between the perimetric portion (33) and the second sheet (8); and
a deforming step during which the first sheet (7) is thermoformed causing the first sheet (7) to partially move away from the second sheet (8) towards the product (1).

2. The method according to claim 1, also comprising a first cutting step during which a first web (10) constituted of the first material is cut to obtain the first sheet (7).

3. The method according to claim 2, wherein the first cutting step is carried out either before the applying step or after the applying step.

4. The method according to claim 2 or 3, also comprising, before the first cutting step, a coupling step during which the second sheet (8) is coupled to the first web (10).

5. The method according to any one of claims 1 to 4, wherein the second sheet (8) is obtained from a second web (11) of the second material and wherein the method also comprises a second cutting step during which the second web (11) is cut to obtain the second sheet (8).

6. The method according to claim 5, wherein the second cutting step is carried out either before the applying step or after the applying step.

7. The method according to claim 5 or 6 when they depend on claim 2, wherein the first cutting step and the second cutting step are carried out together while the second web (11) is superposed on the first web (10).

8. The method according to claim 7, wherein the first web (10) and the second web (11) are at least locally attached to each other at a plurality of separate points or over their entire extent, or at their longitudinal edges.

9. The method according to any one of claims 1 to 8, wherein, before the positioning step, the method comprises a coupling step during which the first sheet (7) and the second sheet (8) are at least locally attached to each other and wherein, during the deforming step, the first sheet (7) partially detaches from the second sheet (8).

10. The method according to any one of claims 1 to 8, wherein the positioning step is carried out while keeping the first sheet (7) and the second sheet (8) in contact with each other.

11. The method according to claim 10, wherein the first sheet (7) and the second sheet (8) are at least locally attached to each other and wherein, during the deforming step, the first sheet (7) detaches from the second sheet (8) at the bottom wall (3) of the container (2).

12. The method according to claim 11, wherein the first sheet (7) and the second sheet (8) are attached to each other at a plurality of separate points or over the entire extent of the second sheet (8), or at adhering lines, or at edges of the second sheet (8).

13. The method according to any one of claims 10 to 12, wherein, during the positioning step, a third web (12) of a two-layered material which comprises a first layer constituted of the first material and a second layer constituted of the second material is positioned over the container (2), the second layer having a width which is less than that of the first layer.

14. The method according to claim 13, also comprising an unwinding step during which the third web (12) is unwound from a reel.

15. The method according to claim 1 wherein the positioning step is carried out by positioning the first sheet (7) over the container (2) and the second sheet (8) over the first sheet (7) detached from each other.

16. The method according to any one of claims 1 to 15, wherein, after the fixing step, the pack containing the product (1) is first subjected to a heating thermal treatment which causes a pressure increase in a space between the first face of the first sheet (7) and the product (1), and then is left or made to cool to ambient temperature so as to cause a pressure reduction in the space between the first face of the first sheet (7) and the product (1), and wherein the deformation of the first sheet (7) is obtained as a result of that pressure reduction caused by the cooling.

17. The method according to any one of claims 1 to 15, wherein:
after the inserting step and before the positioning step there is a feeding step during which the container (2) with the product (1) is fed inside an open sealing device (14);
after the positioning step there is a closing step during which the sealing device (14) is closed with the container (2) with the product (1), the first sheet (7) and the second sheet (8) inside it;
the thermoforming step is a skin applying step during which the vacuum is created inside the sealing device (14) between the heated first sheet (7) and the container (2) and the first sheet (7) is thereby made to adhere to the container (2) and to the product (1).

18. The method according to any one of claims 1 to 17 also comprising an inserting step during which the product (1) is positioned in the container (2), the inserting step being carried out in such a way that, after positioning of the product (1) in the container (2), the perimetric portion (33) is placed, relative to the bottom wall (3), at a height higher than every point of the product (1).

19. The method of claim 18 wherein, during the inserting step, the product (1) is inserted into the container at a temperature greater than 50°C and wherein,
after the fixing step, the product (1) is left or made to cool to ambient temperature so as to cause a pressure reduction in a space between the first face of the first sheet (7) and the container (2); and
the deformation of the first sheet (7) is caused by that pressure reduction.

20. The method according to any one of claims 1 to 19, wherein both the first sheet (7), and the second sheet (8) have a substantially rectangular shape, and wherein a larger side of the second sheet (8) substantially has the same length as a smaller side of the first sheet (7).
